Europäisches Patentamt

European Patent Office

Office européen des brevets

(19)

(11) Veröffentlichungsnummer: **0 196 000**
**B1**

(12) **EUROPÄISCHE PATENTSCHRIFT**

(45) Veröffentlichungstag der Patentschrift:
31.01.90

(51) Int. Cl.⁴: **F16K 11/074**

(21) Anmeldenummer: **86103635.8**

(22) Anmeldetag: **18.03.86**

(54) **Mischventil.**

(30) Priorität: **26.03.85 DE 3510835**

(43) Veröffentlichungstag der Anmeldung:
**01.10.86 Patentblatt 86/40**

(45) Bekanntmachung des Hinweises auf die Patenterteilung:
**31.01.90 Patentblatt 90/5**

(84) Benannte Vertragsstaaten:
**AT BE CH DE FR GB IT LI NL SE**

(56) Entgegenhaltungen:
**EP-A- 0 110 339**
**DE-A- 2 630 207**
**DE-A- 3 125 548**
**DE-A- 3 327 776**
**FR-A- 2 218 516**
**FR-A- 2 485 681**
**GB-A- 2 089 003**

(73) Patentinhaber: **FRIEDRICH GROHE ARMATURENFABRIK GmbH & CO, Hauptstrasse 137, D-5870 Hemer 1(DE)**

(72) Erfinder: **Humpert, Jürgen, Oberlinweg 18, D-5870 Hemer(DE)**
Erfinder: **Pawelzik, Manfred, Herringser Weg 5a, D-4770 Soest(DE)**

## Beschreibung

Die Erfindung betrifft ein Mischventil mit den im Oberbegriff des Anspruchs 1 angegebenen Merkmalen.

Es sind Mischventile bekannt, bei denen zueinander bewegliche Ventilscheiben quer zur Längsachse in einem besonderen Kartuschengehäuse vorgesehen sind. Hierbei sind neben den quer zur Längsachse angeordneten Ventilscheiben außerdem noch Befestigungsschrauben am Randbereich des Ventilgehäuses vorgesehen. Aus Festigkeitsgründen ist hierzu an dem Kunststoffgehäuse eine verhältnismäßig große Anlagefläche für die Schrauben auszubilden, so daß hierdurch ein relativ großer Durchmesser des Ventilgehäuses erforderlich ist, was häufig als Nachteil empfunden wird.

Es ist außerdem aus der DE-A 3 327 776 ein Mischventil bereits bekannt, bei dem ein drehbares Hebelkopfgehäuse für einen Betätigungshebel mit einer als Ringkörper ausgebildeten Scheibe mittels Schnappverbindung befestigt ist. Der Ringkörper mit dem Hebelkopfgehäuse ist hierbei zusammen mit dem Mischventil mit Befestigungsschrauben an der Armatur befestigt.

Der Erfindung liegt die Aufgabe zugrunde, die Befestigungsmittel so auszubilden, daß der Durchmesser des Kunststoffgehäuses bei gleichbleibenden Abmessungen der Ventilscheiben verringert werden kann, wobei das Gehäuse des Mischventils auch in Armaturen mit größerer Aufnahmebohrung einsetzbar sein sollte.

Diese Aufgabe wird erfindungsgemäß dadurch gelöst, daß der Ringkörper als separate Haltescheibe aus Metall gebildet und am Außenmantel des Ventilgehäuses eine Aufnahme für einen Paßring vorgesehen ist. Mit diesen Maßnahmen wird erreicht, daß einerseits mit der metallenen Haltescheibe eine erhebliche Verringerung des Durchmessers des Ventilgehäuses ermöglicht wird und andererseits durch die Ausbildung einer Aufnahme am Ventilgehäuse sichergestellt ist, daß das im Durchmesser verkleinerte Ventilgehäuse auch bei Armaturen verwendet werden kann, die für Mischventile mit einem größeren Durchmesser ausgelegt sind.

In weiterer Ausgestaltung der Erfindung können gemäß Anpruch 2 an dem Gehäuse Axialschlitze als Aufnahme für einen Paßring ausgebildet sein.

Ausführungsbeispiele der Erfindung sind in der Zeichnung dargestellt und werden im folgenden näher erläutert. Es zeigt.

Figur 1 ein in einer Sanitärarmatur angeordnetes Mischventil in Seitenansicht, teilweise geschnitten;

Figur 2 das Mischventil gemäß Figur 1 in Rückansicht, teilweise geschnitten;

Figur 3 eine Haltescheibe des Mischventils gemäß Figur 1 in Draufsicht;

Figur 4 ein anderes Mischventil im Längsschnitt;

Figur 5 einen Teilschnitt des Mischventils gemäß Figur 4 in Ansicht A.

Der Einfachheit halber sind bei den Ausführungsbeispielen in der Zeichnung gleiche oder entsprechende Elemente mit jeweils gleichen Bezugszeichen versehen.

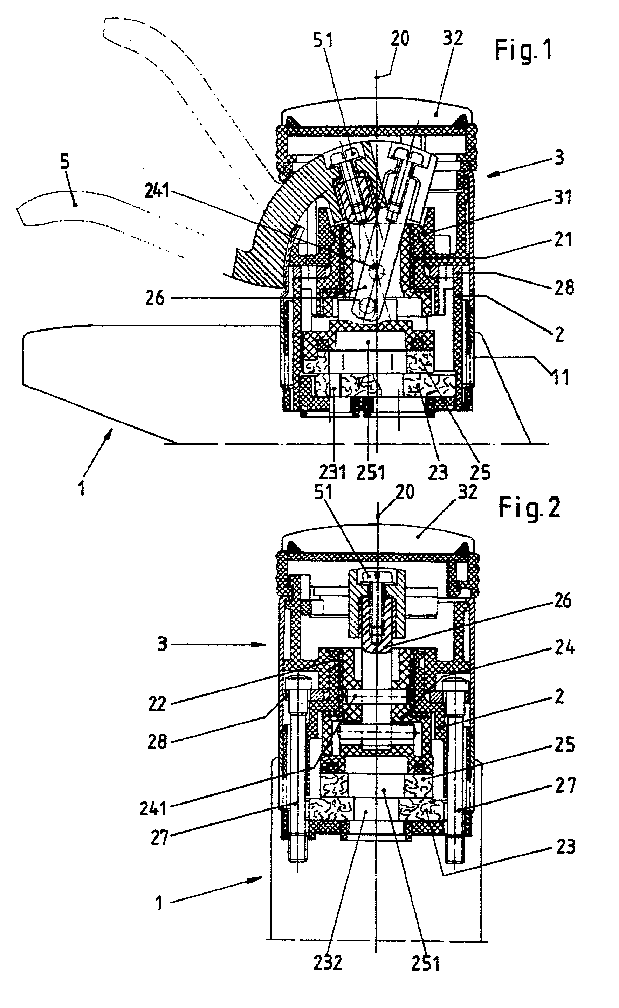

In einer in den Figuren 1 und 2 teilweise dargestellten Armatur 1 ist in einer Aufnahmebohrung 11 ein in einem Ventilgehäuse 2 gekapselt angeordnetes Mischventil eingesetzt. Als Ventilelemente sind zwei aufeinanderliegende Ventilscheiben vorgesehen, wobei eine Ventilsitzscheibe 23 im Ventilgehäuse 2 ortsfest gehaltert und mit Durchtrittsöffnungen 231 für das aus der Armatur 1 zugeführte Kalt- und Warmwasser sowie einer Rückführungsöffnung 232 für das Mischwasser versehen ist. An der Ventilsitzscheibe 23 ist eine Steuerscheibe 25 verschiebbar angelagert und mit einem Überströmkanal 251 versehen. Die Steuerscheibe 25 wird dabei zur einen Hälfte von einer Keramikplatte gebildet und zur anderen Hälfte von einer Abdeck- und Führungsscheibe, welche beide formschlüssig und gedichtet miteinander verbunden sind. Beide aneinanderliegende Scheibenbereiche der Ventilsitzscheibe 23 und der Steuerscheibe 25 sind aus einem verschleißfesten Keramikmaterial hergestellt und liegen mit ihren durch entsprechende Feinstbearbeitung geglätteten Stirnflächen wasserdicht aneinander. An der von der Ventilsitzscheibe 23 abgekehrten Stirnseite der Steuerscheibe 25 ist ein Stellhebel 26 angelenkt. Der Stellhebel 26 ist dabei an einer im Ventilgehäuse 2 axial festliegend aber drehbar gehaltenen Buchse 24 um eine Schwenkachse 241 schwenkbar gelagert. Der Überströmkanal 251 in der Steuerscheibe 25 sowie die Durchtrittsöffnungen 231 und die Rückführungsöffnung 232 in der Ventilsitzscheibe 23 sind so angeordnet und bemessen, daß durch eine Drehbewegung um die Mittelachse 20 das Mischungsverhältnis von Kalt- und Warmwasser und durch eine Schwenkbewegung um die Schwenkachse 241 die Gesamtdurchflußmenge eingestellt werden kann.

Im Bereich der Buchse 24 ist das Ventilgehäuse 2 mit einem Ansatz 21 versehen, in dessen Bereich eine Haltescheibe 28 angeordnet ist. In der Haltescheibe 28 sind in Bohrungen 281 zwei Befestigungsschrauben 27 vorgesehen, mit denen das Ventilgehäuse 2 fest mit der Armatur 1 verbindbar ist. Auf dem Ansatz 21 ist außerdem ein Hebelkopfgehäuse 3 gelagert und mittels Schnappzungen 31, die in eine Ringnut 22 am Ansatz 21 einschnappen, axial festliegend gehalten. In der Seitenwandung des Hebelkopfgehäuses 3 ist ein Schlitz ausgebildet, durch den ein Handhebel 5 mit einem Kreisbogen, dessen Mittelpunkt von der Schwenkachse 241 gebildet ist, hindurchgeführt ist. Der Handhebel 5 ist mit dem Stellhebel 26 durch eine Schraube 51 verbunden. Das Hebelkopfgehäuse 3 ist schließlich an der oberen Stirnseite mit einer verrastbaren Haube 32 verschlossen.

Die aus Metall hergestellte Haltescheibe 28 ermöglicht eine erhebliche Verringerung des Durchmessers des Ventilgehäuses 2, da die Axialkräfte, die durch den Mediendruck und die Vorspannkräfte der Dichtelemente entstehen, auch bei geringen Wandstärken des aus Kunststoff bestehenden Ventilgehäuses 2 sicher über die Befestigungsschrauben 27 abgeleitet werden. Insbesondere die relativ hohe Flächenpressung im Bereich der Köpfe der Befestigungsschrauben 27 kann sicher über die metallene Haltescheibe 28 auf die Stirnfläche des Kunststoffgehäuses verteilt werden, so daß der Durchmesser des Ventilgehäuses 2 bei gleichbleibenden Abmessungen der Ventilscheiben minimiert werden kann.

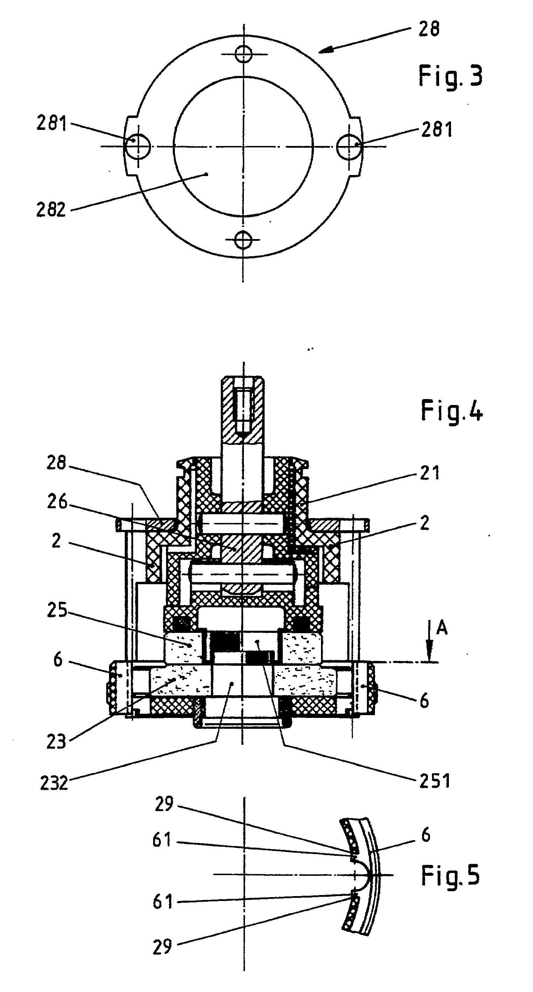

Die Haltescheibe 28 (Figur 3) kann zweckmäßig aus Messing oder Stahl im Stanzverfahren hergestellt werden. Zur sicheren Halterung auf dem Ventilgehäuse 2 weist die Haltescheibe 28 eine Zentrierbohrung 282 auf, mit der die Haltescheibe über den Ansatz 21 gestreift werden kann und somit zentriert an der Ringschulter des Ventilgehäuses 2 zur Anlage gelangt.

In den Figuren 4 und 5 ist in vergrößerter Darstellung das Mischventil ohne Sanitärarmatur gezeigt, wobei am Außenmantel des Ventilgehäuses 2 im Bereich der Ventilsitzscheibe 23 ein Paßring 6 aufsteckbar gehalten ist. Mit Hilfe eines Paßrings 6 kann das Mischventil auch in Sanitärarmaturen eingesetzt werden, die für Mischventile mit größeren Durchmessern ausgelegt sind, so daß die verschiedenen Sanitärarmaturen mit dem vorgeschlagenen Mischventil bestückt werden können. Der Paßring 6 kann von der unteren Stirnseite im Bereich des Ventilgehäuses 2 aufgeschoben werden. Der Paßring 6 ist mit radial vorspringenden Nasen 61 versehen, die in der Stecklage in entsprechend ausgebildete Axialschlitze 29 des Ventilgehäuses 2 einfassen und den Paßring 6 in der Stecklage formschlüssig haltern.

**Patentansprüche**

1. Mischventil für das Sanitärfach mit einer durch ein Griffstück zu einer ortsfest gehalterten, Wasserdurchtrittsöffnungen aufweisenden Ventilsitzscheibe (23) verstellbaren Steuerscheibe (25) zur Regulierung des Mischungsverhältnisses und der Auslaufmenge des Mischwassers, wobei die einzelnen Ventilelemente in einem in Sanitärarmaturen (1) einsetzbaren Ventilgehäuse (2) aus Kunststoff gekapselt angeordnet und wenigstens zwei Befestigungsschrauben im Bereich der Seitenwandung des Ventilgehäuses eingelassen sind, die das Ventilgehäuse (2) an der vorstehenden Stirnseite über einen Ringkörper in der Sanitärarmatur (1) haltern, dadurch gekennzeichnet, daß der Ringkörper als separate Haltescheibe (28) aus Metall ausgebildet ist und daß am Außenmantel des Ventilgehäuses (2) eine Aufnahme für einen Paßring (6) vorgesehen ist, so daß das Mischventil auch bei Sanitärarmaturen mit größerer Aufnahmebohrung einsetzbar ist.

2. Mischventil nach Anspruch 1, dadurch gekennzeichnet, daß im Bereich der Ventilsitzscheibe (23) an der Außenseite des Ventilgehäuses (2) Axialschlitze (29) ausgebildet sind, in die im Paßring (6) ausgebildete Nasen (61) einfassen und den Paßring (6) in der Stecklage formschlüssig halten.

**Claims**

1. A mixer valve for use in sanitary installations, with a control disc (25) displaceable by means of a handle relative to a fixedly mounted valve seat disc (23) having apertures for the passage of water for regulating the mixing ratio and the discharge amount of mixed water, wherein the individual valve elements are arranged encapsulated in a valve housing (2) of plastics which can be installed in sanitary fittings (1) and in the region of the side wall of the separate housing (2) there are let in at least two fixing screws which mount the valve housing (2) in the sanitary fitting (1) at the projecting front side by way of an annular body, characterized in that the annular body is constructed as a separate retaining disc (28) of metal, and on the outer surface of the valve housing (2) there is provided a recess for an adapter ring (6), so that the mixer valve can be used also in sanitary fittings having a relatively large receiving bore.

2. A mixer valve according to claim 1, characterized in that, in the region of the valve seat disc (23), on the outside of the valve housing (2) there are constructed axial slots (29) in which projections (61) formed in the adapter ring (6) engage and hold the adapter ring (6) positively in the engaged position.

**Revendications**

1. Soupape de mélange pour utilisation sanitaire comportant un disque de commande (25) réglable au moyen d'une poignée située sur un disque de siège de soupape (23) maintenu fixe et présentant des orifices de passage d'eau, disque de commande (25) destiné à réguler les rapports de mélange et le débit d'écoulement de l'eau mélangée, les éléments de soupape individuels étant encapsulés dans un boîtier de soupape (2) en matière plastique susceptible d'être introduits dans des robinetteries sanitaires (1) et au moins deux vis de fixation étant introduites dans la zone de la paroi latérale du carter spécial, maintenant le carter de soupape (2) sur la face frontale, par l'intermédiaire d'un corps annulaire situé dans la robinetterie sanitaire (1), caractérisée en ce que le corps annulaire est réalisé en tant que disque de maintien séparé (28) en métal et en ce qu'un logement est prévu, sur l'enveloppe extérieure du carter de soupape (2), pour une bague d'ajustage (6), de sorte que la soupape de mélange puisse également être utilisée pour des robinetteries sanitaires présentant un alésage de réception plus grand.

2. Soupape de mélange selon la revendication 1, caractérisée en ce que, dans la zone du disque de siège de soupape (23), on réalise sur la face extérieure du carter de soupape (2) des fentes axiales (29) dans lesquelles s'engagent des ergots (61) qui sont réalisés dans la bague d'ajustage et maintiennent par interpénétration de forme la bague d'ajustage (6) en position enfichée.

Fig.1

Fig.2

EP 0 196 000 B1

28

Fig. 3

281            281

282

Fig.4

28
26
2
2
25
6                    A
6
23
232
251

29
61                    6
61            Fig.5
29